# FASCICULE DE BREVET EUROPEEN

(11) **EP 2 271 730 B1**
(45) Date de publication et mention de la délivrance du brevet: **06.06.2012**
(21) Numéro de dépôt: 09738294.9
(22) Date de dépôt: 27.03.2009
(51) Int. Cl.: B01D 53/04, B01D 53/75, B01D 53/86, C10G 25/00, B01D 15/00, B01D 53/02, B01J 20/04, B01J 20/08, B01D 53/68, C10G 35/04, C10G 45/04, C10G 45/10, C10G 69/08

(54) **ELIMINATION DES COMPOSES CHLORES DANS LES COUPES HYDROCARBONEES**
ENTFERNUNG CHLORINIERTER VERBINDUNGEN IN KOHLENWASSERSTOFFSTÜCKEN
REMOVAL OF CHLORINATED COMPOUNDS IN HYDROCARBON CUTS

(30) Priorité: 25.04.2008 FR 0802345
(43) Date de publication de la demande: 12.01.2011
(73) Titulaire: IFP Energies nouvelles, 92852 Rueil-Malmaison Cedex (FR)
(72) Inventeur: COSYNS, Jean, F-78580 Maule (FR); DUCREUX, Olivier, F-78430 Louvenciennes (FR); DEBUISSCHERT, Quentin, F-92500 Rueil Malmaison (FR); LE PELTIER, Fabienne, F-92500 Rueil Malmaison (FR)
(86) Numéro de dépôt international: PCT/FR2009/000337
(87) Numéro de publication internationale: WO 2009/133260

(56) Documents cités:
- EP-A- 0 948 995
- EP-A- 1 053 053
- US-A- 4 639 259
- US-A- 5 505 926
- US-A1- 2007 116 620
- US-B1- 6 551 566

## Description

La présente invention est relative à un procédé de purification par élimination du chlore sous forme de chlorure d'hydrogène et de composés organochlorés.

Nous allons illustrer la présente invention dans le cas d'un procédé de purification par élimination du chlore sur une partie d'un effluent d'une zone de réformage.

Un des buts du réformage catalytique est d'obtenir des hydrocarbures présentant un indice d'octane accru. Il est établi que l'indice d'octane d'un hydrocarbure est d'autant plus grand qu'il est ramifié, cyclique voire aromatique. Ainsi, les réactions de cyclisation et d'aromatisation des hydrocarbures seront favorisées.

Habituellement, ces réactions de cyclisation et d'aromatisation d'hydrocarbures ont lieu en présence de catalyseurs hétérogènes bimétalliques chlorés. Ces catalyseurs chlorés sont à base d'alumine et comportent, le plus souvent, du platine et un autre métal tel que par exemple l'étain, le rhénium, ou l'iridium. La présence de chlore dans lesdits catalyseurs est importante car, ajouté à l'alumine, il assure l'acidité globale du système et participe à la redispersion du platine au cours du temps, permettant ainsi de stabiliser l'activité catalytique du catalyseur.

Cependant, l'ajout de chlore n'est pas une solution sans inconvénient. En effet, au cours du temps, une élution du chlore, notamment sous forme de chlorure d'hydrogène, est constatée. Cette élution se traduit d'abord par la nécessité constante de recharger le catalyseur en chlore. Elle conduit également à la présence de chlorure d'hydrogène et d'autres composés chlorés dans les effluents gazeux et liquides issus du réformage catalytique, ce qui pourra conduire à un problème de corrosion de l'installation, à un problème de formation de dépôts ou de sels à base de chlore ou à un problème de contamination accélérée des catalyseurs situés en aval, par exemple les catalyseurs d'hydrogénation de benzène.

Le réformage catalytique produit également de l'hydrogène. Dans le raffinage du pétrole, l'hydrogène est un produit particulièrement précieux, notamment par son utilisation dans les hydrotraitements qui sont de plus en plus développés dans le but d'améliorer la protection de l'environnement.

En sortie de réformage catalytique traditionnel, qui fonctionne sous une pression d'environ 2MPa voire au-delà, les effluents gazeux sont majoritairement composés d'hydrogène, d'hydrocarbures légers comme le méthane, l'éthane..., et présentent en général des traces de chlorure d'hydrogène et d'eau. Il est donc important de pouvoir éliminer toutes traces de chlorure d'hydrogène de ces effluents, par exemple sur des solides à base d'alumine, et ensuite de recycler et donc d'utiliser l'hydrogène purifié, toujours en raffinerie.

Par ailleurs, des procédés régénératifs, ou de nouvelle génération, ont récemment été mis au point et se développent de plus en plus sur le terrain. Ces procédés fonctionnent sous une pression voisine de 0,3 à 1,5 MPa, voire inférieure.

En sortie d'un réformage catalytique régénératif, en plus de l'hydrogène, des hydrocarbures légers, des traces de chlorure d'hydrogène et d'eau, des traces d'hydrocarbures insaturés comme l'éthylène, le propylène, les butènes, le butadiène... ont été détectées. Ces hydrocarbures insaturés, en présence de chlore et au contact d'adsorbant se transforment au moins partiellement en composés organochlorés qui sont des précurseurs d'oligomères de masses moléculaires élevées. Ces "huiles vertes" peuvent entraîner des bouchages de l'installation. Dès lors, une baisse significative de la durée de vie de l'adsorbant est notée : dans certains cas, une baisse de 4 à 5 fois a été observée.

Ce phénomène est aussi observé sur des solides à base d'alumine dédiés à l'élimination du chlore sur les effluents liquide du reformage catalytique qui n'éliminent pas entièrement les composés organochlorés présents et de surcroît peuvent conduire à la formation de composés organo-chlorés en présence de mono oléfines/dioléfines et de chlorure d'hydrogène.

Le but de la présente invention est de proposer un procédé amélioré pour l'élimination efficace des composés chlorés et du chlorure d'hydrogène plus particulièrement, contenus dans un gaz ou un liquide. Un autre but de la présente invention est de proposer un procédé mettant en oeuvre une composition qui réduira substantiellement, voire supprimera, la formation des oligomères, et en particulier des oligomères chlorés appelés "huiles vertes" ou "green oils", en aval des procédés de réformage régénératif ou de nouvelle génération.

Un intérêt de la présente invention est que la suppression des composés chlorés permet en particulier d'éviter la formation néfaste de NH₄Cl ainsi que des problèmes de corrosion liés au chlore.

Un autre intérêt de la présente invention est que la suppression des composés chlorés permet de protéger les catalyseurs des unités en aval, en particulier le catalyseur de l'unité d'hydrogénation du benzène.

### ART ANTÉRIEUR

La demande de brevet EP1053053 décrit un procédé pour éliminer, réduire, et/ou supprimer les composés halogénés contenus dans un gaz ou un liquide, dans lequel on met en contact le gaz ou le liquide avec une composition obtenue par dépôt sur une alumine d'au moins un composé comprenant au moins un élément choisi parmi les alcalins, suivie après le dépôt, d'une calcination de l'alumine à une température d'au moins 600°C.

La demande de brevet EP0948995 décrit un procédé pour éliminer les composés halogénés contenus dans un gaz ou un liquide dans lequel on met en contact le gaz ou le liquide avec une composition comprenant une alumine et/ou une alumine hydratée et au moins un élément métallique choisi dans le groupe constitué par les métaux des groupes VIII, IB et/ou IIB.

Le brevet US6551566 décrit un procédé de traitement d'un flux gazeux contenant plus de 90 vol- % d'hydrogène et des hydrocarbures halogénés tels les hydrocarbures chlorés comprenant l'hydrodéshalogénation de la charge gazeuse sur un catalyseur supporté au nickel pouvant comporter un promoteur tel le platine ou le palladium ainsi que l'élimination de produits de la réaction catalytique tels les acides hydrohalogénés sur un adsorbant tel une alumine imprégnée avec du sodium, potassium ou barium.

### RÉSUMÉ DE L'INVENTION

L'invention concerne un procédé de purification par élimination du chlore sous forme de chlorure d'hydrogène et de composés organochlorés par mise en contact en présence d'hydrogène d'au moins une partie de l'effluent d'une zone de réformage, ladite partie de l'effluent comprenant des oléfines, du chlorure d'hydrogène et des composés organochlorés, sur une zone d'élimination comprenant un enchaînement de deux masses, la 1^{ère} masse étant une masse comprenant au moins un métal du groupe VIII sélectionné dans le groupe constitué par le platine et le palladium et déposé sur un support minéral, la 2^{ème} masse étant un adsorbant de chlorure d'hydrogène, ledit adsorbant étant une alumine promue avec un alcalin ou un alcalino-terreux.

### DESCRIPTION DÉTAILLÉE DE L'INVENTION

Dans le texte, le groupe VIII correspond au groupe VIII selon la classification CAS correspond aux métaux des colonnes 8 à 10 selon la nouvelle classification IUPAC (CRC Handbook of Chemistry and Physics, éditeur CRC press, rédacteur en chef D.R. Lide , 81ème édition, 2000-2001).

Dans le cadre de cette demande de brevet, le terme oléfine correspond à des mono-oléfines et/ou des dioléfines.

L'invention concerne un procédé de purification par élimination du chlore sous forme de chlorure d'hydrogène et de composés organochlorés par mise en contact en présence d'hydrogène d'au moins une partie de l'effluent d'une zone de réformage, ladite partie de l'effluent comprenant des oléfines, du chlorure d'hydrogène et des composés organochlorés, sur une zone d'élimination comprenant un enchaînement de deux masses, la 1^{ère} masse étant une masse comprenant au moins un métal du groupe VIII sélectionné dans le groupe constitué par le platine et le palladium et déposé sur un support minéral, la 2^{ème} masse étant un adsorbant de chlorure d'hydrogène, ledit adsorbant étant une alumine promue avec un alcalin ou un alcalino-terreux.

Selon une variante préférée, au moins une partie de l'effluent de la zone de réformage circule à travers un séparateur gaz liquide, ledit séparateur conduisant à un flux de gaz riche en hydrogène (A) et à un effluent liquide (B), ledit effluent liquide étant envoyé à une zone de stabilisation, ladite zone de stabilisation conduisant à au moins deux coupes, une première coupe légère (C) et une première coupe lourde (D), ladite première coupe lourde étant envoyé à une colonne de fractionnement conduisant à la production d'au moins deux coupes, une deuxième coupe légère (E1) soutirée en tête de colonne, optionnellement une coupe (E2) soutirée entre la tête de colonne et l'alimentation de la colonne, chacune des coupes (E1) et (E2) pouvant être envoyée à une zone d'hydrogénation du benzène, et une deuxième coupe lourde (F). La zone de purification est placée sur tout flux provenant du séparateur gaz liquide, de la colonne de stabilisation ou de la colonne de fractionnement.

Selon une variante préférée de l'invention, la zone de purification est placée sur le flux de gaz riche en hydrogène (A), sur l'effluent liquide (B) ou sur au moins une des coupes (E1) ou (E2).

Selon une variante, de l'hydrogène est ajouté lors de la mise en contact sur la zone d'élimination, d'au moins une partie de l'effluent d'une zone de réformage, de production d'aromatiques, de déshydrogénation, d'isomérisation ou d'hydrogénation.

Les deux masses de la zone de captation sont généralement soit chargées dans un même réacteur, soit dans deux réacteurs différents. Dans le cas où les deux masses sont chargées dans le même réacteur, la première masse est généralement la masse catalytique et la deuxième masse est généralement l'adsorbant de chlorure d'hydrogène.

Selon une variante, les deux masses sont disposées dans le même réacteur et la première masse est généralement disposée en tête de la zone de captation. Elle occupe alors un volume correspondant généralement à de 10 à 60 % du volume total de la dite zone.

Selon une variante, lorsque la deuxième masse est saturée, elle est déchargée séparément tout en déviant la charge à traiter vers un troisième réacteur comprenant un adsorbant de chlorure d'hydrogène. Ceci permet d'assurer la continuité de l'opération.

Le métal du groupe VIII est le palladium et/ou le H est platine. Ces métaux sont déposés sur le support en utilisant les méthodes connues de l'homme de métier à savoir par imprégnation de solutions aqueuses de sels solubles de palladium et de platine. Par exemple, si le métal du groupe VIII est le palladium, il peut être introduit par des techniques d'imprégnation de solution aqueuse ou organique d'un précurseur de palladium. Ce précurseur peut par exemple être un composé minéral tel que le chlorure de palladium, le nitrate de palladium, le palladium tétramine dihydroxyde, le chlorure de palladium tétramine ou un composé organométallique tel que par exemple le palladium bis z-allyle ou le palladium bis-acétylacétonate. Le palladium est déposé de préférence en croûte, c'est-à-dire à la surface des grains de catalyseur, par exemple billes ou extrudés cylindriques, avec une pénétration dans les grains comprise dans une couche périphérique ne dépassant pas par exemple 80 % du rayon des billes ou des cylindres. L'épaisseur de croûte est généralement comprise entre 100 et 700 micromètres.

Après introduction des différents éléments, le catalyseur est généralement séché à environ 120 °C, puis calciné à des températures généralement comprises entre 150 et 700 °C.

La teneur en palladium ou platine est généralement comprise entre 0,1 et 1 % poids et de préférence entre 0,2 et 0,6% poids.

Le support minéral utilisé peut être choisi parmi l'alumine, la silice, la silice alumine, la silice magnésie, l'oxyde de titane, des alumino silicates type zéolites, tous ces solides étant pris seuls ou en mélange entre eux. On utilisera de préférence l'alumine.

La deuxième masse est constituée par un ou plusieurs composés alcalins ou alcalinoterreux déposés sur une alumine d'une surface spécifique généralement comprise entre 50 et 400 m²/g.

Elles peuvent comprendre aussi des oxydes mixtes notamment à base de cuivre et/ou de zinc.

La teneur en alcalin ou alcalinoterreux est généralement comprise entre 0,5 % et 70 % poids et de préférence entre 2 % et 35 % poids par rapport au poids total de la composition.

Le dépôt des éléments alcalins et alcalinoterreux peut être réalisé par toute méthode connue par l'homme de métier par exemple par imprégnation de l'alumine avec une solution aqueuse de sels solubles d'alcalins ou alcalinoterreux. Après imprégnation, la masse est séchée et calcinée de manière appropriée, la température de calcination étant généralement comprise entre 300 et 900°C.

La deuxième masse peut se présenter sous toute forme permettant la plus grande accessibilité et donc la plus grande capacité d'adsorption possible de chlorure d'hydrogène. On utilisera par exemple des billes ou des extrudés qui peuvent être de toutes formes par exemple sous la forme de trilobes. Le diamètre moyen des billes et des extrudés seront les plus petits possible par exemple entre 1 et 5 mm tout en veillant à ne pas provoquer de trop grandes pertes de charge dans le réacteur.

La partie de l'effluent de la zone de réformage traitée contient généralement entre 0,1 et 50 ppm poids de composés chlorés compté en chlore. Généralement, la zone d'élimination est opérée en présence d'hydrogène, de préférence avec un rapport molaire hydrogène sur chlore supérieur à 5, de manière très préférée avec un rapport molaire hydrogène sur chlore compris entre 5 et 10⁶, à une température comprise entre 25 et 350°C, de préférence entre 35 et 200°C, de préférence entre 130 et 180°C et à une pression comprise entre 0,2 et 5 MPa, de préférence entre 0,5 et 4MPa, de préférence entre 1 et 3 MPa.

Les vitesses spatiales des gaz à purifier exprimées en débit horaire volumique TPN du gaz divisé par le volume de masse, GHSV sont généralement comprises entre 50 et 2000 h⁻¹ et de préférence entre 100 et 1000 h⁻¹.

Les vitesses spatiales des liquides à purifier exprimées en débit horaire volumique de liquide divisé par le volume de masse (LHSV) sont généralement compris entre 1 et 50 et de préférence entre 2 et 40 h⁻¹.

L'hydrogène peut être présent initialement dans la charge hydrocarbonée à traiter. En particulier dans les charges liquides sous forme dissoute à partir de 100 ppm molaire. L'hydrogène peut aussi être ajouté lors de la mise en contact sur la zone d'élimination, d'au moins une partie de l'effluent d'une zone de réformage, de production d'aromatiques, de déshydrogénation, d'isomérisation ou d'hydrogénation.

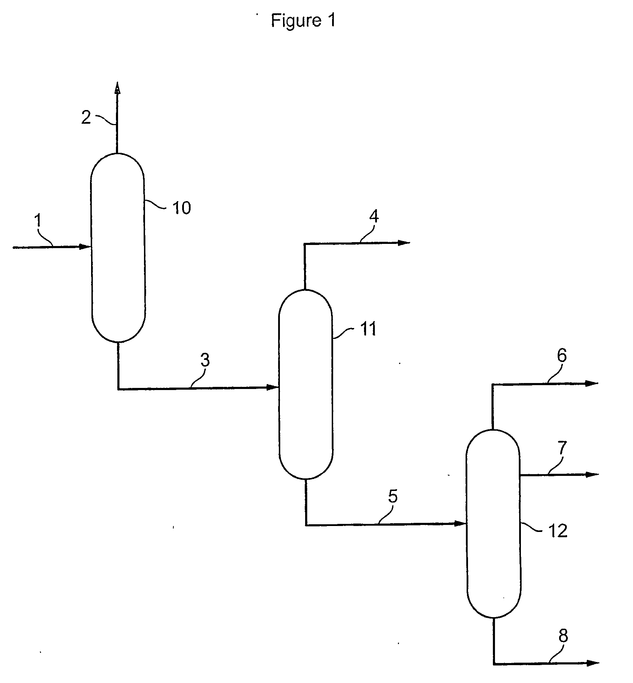

La figure 1 représente le traitement de l'effluent de la zone de réformage.

Au moins une partie de l'effluent de la zone de réformage circule via la ligne (1) à travers un séparateur gaz liquide (10), ledit séparateur conduisant à un flux de gaz riche en hydrogène (A) circulant via la ligne (2) et à un effluent liquide (B) circulant via la ligne (3), ledit effluent liquide étant envoyé via la ligne (3) à une zone de stabilisation (11), ladite zone de stabilisation conduisant à au moins deux coupes, une première coupe légère (C) circulant via la ligne (4) et une première coupe lourde (D) circulant via la ligne (5), ladite première coupe lourde étant envoyé via la ligne (5) à une colonne de fractionnement (12) conduisant à la production d'au moins deux coupes, une deuxième coupe légère (E1) soutirée en tête de colonne et circulant via la ligne (6), optionnellement une coupe (E2) soutirée entre la tête de colonne et l'alimentation de la colonne et circulant via la ligne (7), chacune des coupes (E1) et (E2) pouvant être envoyée à une zone d'hydrogénation du benzène, et une deuxième coupe lourde (F) circulant via la ligne (8). La zone de purification est placée sur tout flux provenant du séparateur gaz liquide (10), de la colonne de stabilisation (11) ou de la colonne de fractionnement (12).

### EXEMPLE 1 : comparatif

On utilise une alumine préparée selon la méthode de préparation décrite dans la demande de brevet EP1053053. Elle se présente sous forme de billes de 2 à 5 mm et a une surface spécifique de 349 m²/g. On incorpore d'abord le sodium par imprégnation dite à sec d'une solution de NaNO₃ de manière à obtenir 6,7 % pds de sodium après séchage à 100°C et calcination à 820°C.

On place 100 cm³ de cette masse A dans un réacteur cylindrique et alimente ce réacteur avec un effluent liquide (reformat haute sévérité) provenant d'un séparateur gaz-liquide de l'unité de reformage. Cet effluent est nommé (B) dans la description.

Ce reformat haute sévérité a les caractéristiques suivantes :

| | |
|---|---|
| Distillation ASTM | Point initial : 20°C |
| | Point final : 200°C |
| Teneur en mono-oléfines : | 1,9 % pds |
| Teneur en dioléfines : | 1000 ppm pds |
| Teneur en H2 : | 0,15 % mole |
| Teneur en chlore (ex HCl) : | 6 ppm pds (1) |
| Teneur en chlore (ex organochlorés) : | 2 ppm pds (2) |

| | |
|---|---|
| (1) Méthode d'analyse: UOP 588 (2) Méthode d'analyse: ASTM D 4929 | |

On fait circuler ce réformat à un débit de 2 litres par heure ce qui correspond à une vitesse spatiale liquide de 20 h⁻¹. Le réacteur est opéré à une température de 140°C et sous une pression de 1 MPa.

On fait fonctionner ce réacteur pendant 1 000 heures.

On mesure les teneurs en oléfines et en chlore au bout de 200 et de 1000 heures.

Les résultats obtenus sont résumés dans le tableau suivant :

| Concentrations | Après 200 heures | Après 1000 heures |
|---|---|---|
| Chlore ex HCl (ppm pds) | 0 | 1 |
| Chlore ex organochlorés (ppm pds) | 2 | 7 |

On constate que seul l'HCl est absorbé par la masse au bout de 200 heures. Par contre, au bout de 1 000 heures on constate l'apparition d'une concentration importante en organochlorés, l'HCl lui-même n'étant plus totalement absorbé. Ceci s'explique par le fait que la masse est saturée par l'HCl et que celui-ci au lieu de s'adsorber réagit avec les oléfines présentes pour former des composés organochlorés.

### EXEMPLE 2 : selon invention

On prépare une masse B comprenant 0,3 % pds de palladium déposé sur alumine. Le palladium est déposé par imprégnation dite à sec à partir de Pd(NO₃)₂. L'alumine se présente sous la forme de billes de 3 mm de diamètre moyen, elle a une surface spécifique de 120 m²/g. Après imprégnation, la masse est séchée à 120°C puis calcinée à 450°C. On obtient ainsi un dépôt de palladium qui reste en croûte sur la bille. L'épaisseur de cette croûte est de 300 microns.

On prépare une deuxième masse C selon la méthode de préparation décrite dans la demande de brevet EP1053053 comprenant 6,7 % de Na après imprégnation de NaNO₃ et calcination à 820°C d'une alumine équivalente à celle décrite dans l'exemple 1.

On dispose 100 cm3 de chacune de ces masses dans un réacteur cylindrique, la première en tête, la seconde au fond, les deux étant séparées par une grille métallique.

On opère avec la même charge liquide et dans les mêmes conditions que celles de l'exemple 1. On fait fonctionner ce réacteur pendant 1 000 heures et l'on mesure les teneurs en oléfines et en chlore au bout de 200 heures, 800 heures, et 1000 heures.

Les résultats obtenus sont résumés dans le tableau suivant :

| Concentrations | Après 200 h | Après 800 h | Après 1000 h |
|---|---|---|---|
| Chlore ex HCl (ppm pds) | 0 | 1 | 8 |
| Chlore ex organochlorés (ppm pds) | 0 | 0 | 0 |

On observe que tous les organochlorés sont transformés. Mais au bout de 800 heures apparaît la première trace d'HCl, ce qui annonce la proche saturation de la masse de captation d'HCl.

### EXEMPLE 3 : selon invention

Dans cet exemple, on traite la coupe légère (nommé réformat léger et contenant la majeure partie du benzène) issue de la colonne de fractionnement avant son envoi à une zone d'hydrogénation du benzène. Cette coupe est nommée E1 dans la description.

Cette coupe a les caractéristiques suivantes :

| | |
|---|---|
| Distillation ASTM | Point initial : 35°C |
| | Point final : 75°C |
| Teneur en mono-oléfines : | 1,0 % pds |
| Teneur en dioléfines : | 1000 ppm pds |
| Teneur en chlore (ex HCl) : | 2 ppm pds (1) |
| Teneur en chlore (ex organochlorés) : | 1,5 ppm pds (2) |

On dispose 100 cm3 de la masse catalytique B au palladium décrite dans l'exemple 2 dans un premier réacteur.

Dans un deuxième réacteur, on charge 100 cm3 de la masse C de captation d'HCl de l'exemple 2.

On fait passer sur ces deux réacteurs disposés en série un débit de 1 litre par heure de la charge à traiter dans les conditions suivantes :

| | |
|---|---|
| Température : | 140°C |
| Pression : | 2,5 MPa |
| Débit H₂ : | 240 litres TPN/heure (soit environ 1 mole H₂/mole charge) |

On fait fonctionner les deux réacteurs pendant 1 000 heures et l'on mesure les teneurs en oléfines et au chlore au bout de 500 et 1 000 heures.

Les résultats obtenus sont résumés dans le tableau suivant :

| Concentrations | Après 500 heures | Après 1000 heures |
|---|---|---|
| Oléfines (% pds) | 0,1 | 0,1 |
| Chlore ex (ppm pds) | 0 | 0 |
| Chlore ex organochlorés (ppm pds) | 0 | 0 |

On constate que tous les composés chlorés sont totalement éliminés.

### EXEMPLE 4 : selon invention

On traite cette fois l'effluent gazeux riche en hydrogène (nommé (A) dans la description) provenant du séparateur de l'unité de reforming dont la composition est la suivante :

| Composition | % mole |
|---|---|
| H₂ | 92 |
| C₁ | 1 |
| C₂ | 1,2 |
| C3₊ | 1,3 |
| C4₊ | 4,5 |
| Oléfines | 0,1 |

Analyse des composés chlorés :

| | |
|---|---|
| HCl | 3 ppm vol |
| Organochlorés | 0 |

On compare dans cet exemple 4 le comportement de la masse A avec celui de la combinaison des masses B et C.

On utilise dans un cas le réacteur chargé comme dans l'exemple 1 et dans l'autre cas la disposition de l'exemple 2.

On opère dans les conditions suivantes :

| | |
|---|---|
| Pression : | 1,5 MPa |
| T°C: | 40°C |
| Débit gazeux : | 80 litres/h (GHSV = 800h⁻¹) |

Les résultats obtenus au bout de 200 h et 1000 h sont résumés dans le tableau suivant :

| | Après 200 heures | | Après 1000 heures | |
|---|---|---|---|---|
| Concentrations | Disposition | | Disposition | |
| masses | A | B+C | A | B+C |
| Oléfines (ppm vol) | 500 | <10 | 500 | <10 |
| Chlore ex HCl (ppm vol) | 0 | 0 | 0,5 | 0,3 |
| Chlore ex organochlorés (ppm vol) | 0 | 0 | 2,5 | 0 |

On observe que la masse A de l'exemple 1, au bout de 1000 h, fait disparaître l'HCl non pas par adsorption mais par addition sur les oléfines présentes. Au contraire, la disposition de l'exemple 2 avec les masses B et C continue à éliminer quasi totalement l'HCl en évitant la formation d'organochlorés grâce à l'hydrogénation quasi complète des oléfines présentes.

## Revendications

1. Procédé de purification par élimination du chlore sous forme de chlorure d'hydrogène et de composés organochlorés par mise en contact en présence d'hydrogène d'au moins une partie de l'effluent d'une zone de réformage, ladite partie de l'effluent comprenant des oléfines, du chlorure d'hydrogène et des composés organochlorés, sur une zone d'élimination comprenant un enchaînement de deux masses, la 1^{ère} masse étant une masse comprenant au moins un métal du groupe VIII sélectionné dans le groupe constitué par le platine et le palladium et déposé sur un support minéral, la 2^{ème} masse étant un adsorbant de chlorure d'hydrogène, ledit adsorbant étant une alumine promue avec un alcalin ou un alcalino-terreux.

2. Procédé de purification par élimination du chlore selon la revendication 1 dans lequel au moins une partie de l'effluent de la zone de réformage circule à travers un séparateur gaz liquide, ledit séparateur conduisant à un flux de gaz riche en hydrogène (A) et à un effluent liquide (B), ledit effluent liquide étant envoyé à une colonne de stabilisation, ladite colonne de stabilisation conduisant à au moins deux coupes, une première coupe légère (C) et une première coupe lourde (D), ladite première coupe lourde étant envoyé à une colonne de fractionnement conduisant à la production d'au moins deux coupes, une deuxième coupe légère (E1) soutirée en tête de colonne, la coupe (E1) pouvant être envoyée à une zone d'hydrogénation du benzène et une deuxième coupe lourde (F), la zone de purification étant placée sur tout flux provenant du séparateur gaz liquide, de la colonne de stabilisation ou de la colonne de fractionnement.

3. Procédé de purification par élimination du chlore selon la revendication 2 dans lequel ladite colonne de fractionnement conduit à la production d'au moins trois coupes, une deuxième coupe légère (E1) soutirée en tête de colonne, une coupe (E2) soutirée entre la tête de colonne et l'alimentation de la colonne, chacune des coupes (E1) et (E2) pouvant être envoyée à une zone d'hydrogénation du benzène, et une deuxième coupe lourde (F).

4. Procédé de purification par élimination du chlore selon la revendication 3 dans lequel la zone de purification est placée sur le flux de gaz riche en hydrogène (A), sur l'effluent liquide (B) ou sur au moins une des coupes (E1) ou (E2).

5. Procédé de purification par élimination du chlore selon l'une des revendications 1 à 4 dans lequel la zone d'élimination est opérée en présence d'hydrogène, avec un rapport molaire hydrogène sur chlore supérieur à 5, à une température comprise entre 25 et 350°C et à une pression comprise entre 0,2 et 5 MPa.

6. Procédé de purification par élimination du chlore selon l'une des revendications 1 à 5 dans lequel les deux masses de la zone d'élimination sont soit chargées dans un même réacteur, soit dans deux réacteurs différents.

7. Procédé de purification par élimination du chlore selon la revendication 6 dans lequel les deux masses sont chargées dans le même réacteur et dans lequel la première masse est la masse comprenant au moins un métal du groupe VIII déposé sur un support minéral et la deuxième masse est l'adsorbant de chlorure d'hydrogène.

8. Procédé de purification par élimination du chlore selon la revendication 7 dans lequel lorsque la deuxième masse est saturée, elle est déchargée séparément tout en déviant la charge à traiter vers un troisième réacteur comprenant un adsorbant de chlorure d'hydrogène.

9. Procédé de purification par élimination du chlore selon l'une des revendications 1 à 8 dans lequel la première masse comprend au moins un support minéral sélectionné dans le groupe constitué par l'alumine, la silice, la silice alumine, la silice magnésie, l'oxyde de titane et les alumino silicates.

## Claims

1. A process for purification by elimination of chlorine in the form of hydrogen chloride and organochlorine compounds by contacting in the presence of hydrogen of at least a part of the effluent from a reforming zone, said part of the effluent comprising olefins, hydrogen chloride and organochlorine compounds, on an elimination zone comprising a chain arrangement of two masses, the first mass being a mass comprising at least one metal from group VIII selected from the group formed by platinum and palladium and deposited on a mineral carrier and the second mass being a hydrogen chloride adsorbent, said adsorbent being an alumina promoted with an alkali metal or an alkaline earth metal.

2. A process for purification by elimination of chlorine according to claim 1 wherein at least a part of the effluent from the reforming zone circulates through a gas-liquid separator, said separator leading to a flow of gas rich in hydrogen (A) and a liquid effluent (B), said liquid effluent being passed to a stabilisation column, said stabilisation column leading to at least two cuts, a first light cut (C) and a first heavy cut (D), said first heavy cut being passed to a fractionating column leading to the production of at least two cuts, a second light cut (E1) taken off at the column head, which cut (E1) can be passed to a benzene hydrogenation zone, and a second heavy cut (F), the purification zone being placed on any flow coming from the gas-liquid separator, the stabilisation column or the fractionating column.

3. A process for purification by elimination of chlorine according to claim 2 wherein said fractionating column leads to the production of at least three cuts, a second light cut (E1) taken off at the column head, a cut (E2) taken off between the column head and the supply of the column, each of which cuts (E1) and (E2) can be passed to a benzene hydrogenation zone, and a second heavy cut (F).

4. A process for purification by elimination of chlorine according to claim 3 wherein the purification zone is placed on the flow of gas which is rich in hydrogen (A), the liquid effluent (B) or at least one of the cuts (E1) or (E2).

5. A process for purification by elimination of chlorine according to one of claims 1 to 4 wherein the elimination zone is operated in the presence of hydrogen with a molar ratio of hydrogen to chlorine of higher than 5, at a temperature of between 25 and 350°C and at a pressure of between 0.2 and 5 MPa.

6. A process for purification by elimination of chlorine according to one of claims 1 to 5 wherein the two masses of the elimination zone are either charged in the same reactor or in two different reactors.

7. A process for purification by elimination of chlorine according to claim 6 wherein the two masses are charged in the same reactor and wherein the first mass is the mass comprising at least one metal from group VIII deposited on a mineral carrier and the second mass is the hydrogen chloride adsorbent.

8. A process for purification by elimination of chlorine according to claim 7 wherein when the second mass is saturated, it is discharged separately while diverting the charge to be treated towards a third reactor comprising a hydrogen chloride adsorbent.

9. A process for purification by elimination of chlorine according to one of claims 1 to 8 wherein the first mass comprises at least one mineral carrier selected from the group formed by alumina, silica, silica alumina, silica magnesia, titanium oxide and aluminosilicates.

## Patentansprüche

1. Verfahren zur Reinigung durch Entfernen des Chlors in Form von Chlorwasserstoff und von chlororganischen Verbindungen durch Inkontaktbringen, in Gegenwart von Wasserstoff, mindestens eines Teils des Abflusses aus einer Reformierungszone, wobei der Teil des Abflusses Olefine, Chlorwasserstoff und chlororganische Verbindungen umfasst, in einer Entfernungszone, die eine Reihenanordnung von zwei Massen umfasst, wobei die 1. Masse eine Masse ist, die mindestens ein Metall der Gruppe VIII umfasst, ausgewählt aus der Gruppe bestehend aus Platin und Palladium, und auf einem mineralischen Träger abgelagert ist, wobei die 2. Masse ein Chlorwasserstoff-Adsorptionsmittel ist, wobei das Adsorptionsmittel ein Aluminiumoxid ist, das mit einem Alkalimetall oder einem Erdalkalimetall verstärkt wird.

2. Verfahren zur Reinigung durch Entfernen des Chlors nach Anspruch 1, wobei mindestens ein Teil des Abflusses aus der Reformierungszone durch einen Gas-Flüssig-Separator zirkuliert, wobei der Separator zu einem wasserstoffreichen Gasstrom (A) und zu einem flüssigen Abfluss (B) führt, wobei der flüssige Abfluss zu einer Stabilisatorkolonne geschickt wird, wobei die Stabilisatorkolonne zu mindestens zwei Schnitten führt, einem ersten leichten Schnitt (C) und einem ersten schweren Schnitt (D), wobei der erste schwere Schnitt zu einer Fraktionierkolonne geschickt wird, die zur Produktion von mindestens zwei Schnitten führt, einem zweiten leichten Schnitt (E1), der am Kopf der Säule entnommen wird, wobei der Schnitt (E1) zu einer Benzolhydrierungszone geschickt werden kann, und einem zweiten schweren Schnitt (F), wobei die Reinigungszone an jedem Strom, der aus dem Gas-Flüssig-Separator, aus der Stabilisatorkolonne oder aus Fraktionierkolonne stammt, angeordnet ist.

3. Verfahren zur Reinigung durch Entfernen des Chlors nach Anspruch 2, wobei die Fraktionierkolonne zur Produktion von mindestens drei Schnitten führt, einem zweiten leichten Schnitt (E1), der am Kopf der Kolonne entnommen wird, einem Schnitt (E2), der zwischen dem Kopf der Kolonne und dem Zulauf der Kolonne entnommen wird, wobei jeder der Schnitte (E1) und (E2) zu einer Benzolhydrierungszone geschickt werden kann, und einem zweiten schweren Schnitt (F).

4. Verfahren zur Reinigung durch Entfernen des Chlors nach Anspruch 3, wobei die Reinigungszone an dem wasserstoffreichen Strom (A), an dem flüssigen Abfluss (B) oder an mindestens einem der Schnitte (E1) oder (E2) angeordnet ist.

5. Verfahren zur Reinigung durch Entfernen des Chlors nach einem der Ansprüche 1 bis 4, wobei die Entfernungszone in Gegenwart von Wasserstoff mit einem Molverhältnis von Wasserstoff zu Chlor größer als 5, bei einer Temperatur im Bereich zwischen 25 und 350°C und bei einem Druck im Bereich zwischen 0,2 und 5 MPa betrieben wird.

6. Verfahren zur Reinigung durch Entfernen des Chlors nach einem der Ansprüche 1 bis 5, wobei die beiden Massen der Entfernungszone entweder in einen einzigen Reaktor oder in zwei verschiedene Reaktoren geladen werden.

7. Verfahren zur Reinigung durch Entfernen des Chlors nach Anspruch 6, wobei die beiden Massen in einen Reaktor geladen werden und wobei die erste Masse die Masse ist, die mindestens ein Metall der Gruppe VIII umfasst, das auf einem mineralischen Träger abgelagert ist, und die zweite Masse ein Chlorwasserstoff-Adsorptionsmittel ist.

8. Verfahren zur Reinigung durch Entfernen des Chlors nach Anspruch 7, wobei die zweite Masse, wenn sie gesättigt ist, getrennt entladen und die zu behandelnde Beschickung dabei zu einem dritten Reaktor umgelenkt wird, der ein Chlorwasserstoff-Adsorptionsmittel umfasst.

9. Verfahren zur Reinigung durch Entfernen des Chlors nach einem der Ansprüche 1 bis 8, wobei die erste Masse mindestens einen mineralischen Träger umfasst, ausgewählt aus der Gruppe bestehend aus Aluminiumoxid, Siliciumdioxid, Siliciumdioxid-Aluminiumoxid, Siliciumdioxid-Magnesiumoxid, Titanoxid und Alumosilicaten.
